# EUROPÄISCHE PATENTSCHRIFT

(11) **EP 1 350 424 B1**
(45) Veröffentlichungstag und Bekanntmachung des Hinweises auf die Patenterteilung: **07.09.2005**
(21) Anmeldenummer: 03100807.1
(22) Anmeldetag: 28.03.2003
(51) Int. Cl.: A01F 12/40

(54) **Mähdrescher mit motorisch verstellbarer Strohleiteinrichtung**
Harvester combine with motorized straw guiding device
Moisonneuse-batteuse avec dispositif de guidage de paille motorisé ajustable

(30) Priorität: 05.04.2002 DE 10215026
(43) Veröffentlichungstag der Anmeldung: 08.10.2003
(73) Patentinhaber: DEERE & COMPANY, Illinois 61265-8098 (US)
(72) Erfinder: Bueermann, Martin, 66500, Hornbach (DE)
(74) Vertreter: Holst, Sönke

(56) Entgegenhaltungen:
- EP-A- 0 685 151
- DE-A- 4 035 470
- DE-A- 4 313 841
- US-A- 4 489 734
- US-A- 6 073 427

## Beschreibung

Die Erfindung betrifft einen Mähdrescher mit einer Trenneinrichtung, einer Austrageinrichtung für Stroh, insbesondere einem Strohhäcksler, der eine durch einen Motor verstellbare Strohleitvorrichtung zugeordnet ist, und einer Steuereinrichtung des Motors, die mit einem zur Erfassung der Querverteilung des Guts eingerichteten Sensor verbunden ist.

Bei einem Einsatz von Anbaustrohhäckslern an Mähdreschern soll das gehäckselte Halmgut auf Schnittbreite mit über die Breite möglichst homogener Massenverteilung ausgebracht werden. Ein üblicher Strohhäcksler arbeitet dabei mit mehreren auf einem Häckselrotor befestigten Messern. Dieser Häckselrotor dreht mit hoher Drehzahl und zerschneidet das ihm zugeführte Halmgut, wobei die rotierenden Messer durch eine feststehende Gegenmesserleiste hindurch streichen. Gleichzeitig muss der Häckselrotor dabei einen Luftstrom erzeugen, der das gehäckselte Halmgut ausblasen kann. Damit das gehäckselte Halmgut vom Häcksler gleichmäßig von der Maschinenkanalbreite auf die Schneidwerksbreite verteilt werden kann, muss die Beschickung des Strohhäckslers sehr gleichmäßig erfolgen. Eine gleichmäßige Beschickung ist auch bei Mähdreschern erforderlich, die mit zwei unabhängigen Austrageinrichtungen arbeiten.

Bei konventionellen Schüttlermähdreschern stellt die gleichmäßige Beschickung des Häckslers im Allgemeinen kein Problem dar, da die Belastung der Strohschüttler recht gleichmäßig ist. Bei Mähdreschern mit rotierenden Abscheidesystemen ist eine gleichmäßige Beschickung des Strohhäckslers nicht immer gewährleistet. Bei diesen Mähdreschern wird das Halmgut von einem oder zwei Dresch- und/oder Trennrotoren wendelförmig durch einen nach unten für ausgedroschene Körner durchlässigen, zylindrischen und teilweise exzentrischen Mantel gefördert, wobei das Korn abgeschieden wird.

In Abhängigkeit von verschiedenen Gutparametern, vor allem aber der Gutfeuchte, verändert sich bei Rotorabscheidesystemen die Anzahl der Umläufe um den Dresch- und/oder Trennrotor. Damit verändert sich auch der Abgabepunkt beim Verlassen des Dresch-und/oder Trennrotors und damit die Beschickung des Strohhäckslers. So ist es bei einem mit zwei Trennrotoren ausgestatteten Mähdrescher denkbar, dass bei trockenem Gut das Material mehr zur Mitte abgeworfen wird und bei feuchtem Gut mehr nach außen. Bei einem nur mit einem einzigen Dresch-und/oder Trennrotor ausgestatteten Mähdrescher wird das Gut entsprechend weiter links oder rechts ausgeworfen.

In der DE 43 13 841 A ist ein Axialflussmähdrescher beschrieben, bei dem die ausgedroschenen Erntegutreste einem Strohhäcksler mit horizontaler, quer zur Fahrtrichtung orientierter Drehachse zugeführt werden. Zwischen dem Auslass des Rotors und dem Einlass des Strohhäckslers ist eine Strohleitvorrichtung vorgesehen. Die Strohleitvorrichtung ist zur Anpassung an die jeweiligen Erfordernisse um eine in ihrem vorderen Bereich liegende Achse verschwenkbar. Es ist ein Motor zur Fernverstellung der Strohleitvorrichtung von der Kabine des Mähdreschers aus vorgesehen.

Die EP 0 685 151 A schlägt eine Verteilvorrichtung für einen Strohhäcksler eines Mähdreschers vor, die eine Anzahl seitlich nebeneinander angeordneter Leitbleche umfasst. Die Leitbleche werden durch Stellmotore bewegt, die mit Sensoren gekoppelt sind, welche die Flugbahn des austretenden Häckselguts berührungslos detektieren. Die Sensoren arbeiten mit Licht, Ultraschall oder Radarwellen. Dadurch kann der Seitenwindeinfluss kompensiert werden.

Während bei der fernverstellbaren Strohleitvorrichtung aus der DE 43 13 841 A als nachteilig anzusehen ist, dass der Bediener des Mähdreschers beim Einstellen der Strohleitvorrichtung von wichtigeren Aufgaben abgelenkt wird und das Resultat des von ihm durchgeführten Stellvorgangs nur indirekt und auch nur sehr mangelhaft anhand des ausgeworfenen Strohs erkennen kann, wozu ein Blick in den Rückspiegel erforderlich ist, hat die Verteilvorrichtung gemäß der EP 0 685 151 A den Nachteil, dass die dort vorgeschlagenen Sensoren aufwändig und teuer sind. Außerdem besteht dort keine Möglichkeit, eine ungleichmäßige eingangsseitige Beschickung des Strohhäckslers auszugleichen.

Das der Erfindung zugrunde liegende Problem wird darin gesehen, mit einfachen Mitteln eine Verbesserung der Querverteilung des Häckselguts eines Strohhäckslers zu erzielen.

Diese Aufgabe wird erfindungsgemäß durch die Lehre der Patentansprüche 1 und 4 gelöst, wobei in den weiteren Patentansprüchen Merkmale aufgeführt sind, die die Lösung in vorteilhafter Weise weiterentwickeln.

Nach einem ersten Gesichtspunkt der Erfindung erfasst ein Sensor die Querverteilung des Häckselguts. Der Sensor ist mit einer Steuereinrichtung verbunden, die einen Motor ansteuert. Der Motor verstellt eine zwischen der Trenneinrichtung und der Austrageinrichtung angeordnete Strohleitvorrichtung. Die Austrageinrichtung kann ein Strohhäcksler oder eine andere, angetriebene Einrichtung zum Austragen gehäckselten Strohs sein, beispielsweise ein rotierender Strohverteilerteller.

Auf diese Weise wird durch eine entsprechende Ansteuerung des Motors der Strohleitvorrichtung selbsttätig eine möglichst gleichmäßige eingangsseitige Beaufschlagung der Austrageinrichtung erzielt. Durch die Verwendung der Signale der Sensoren erhält man eine Regelung für die Strohleitvorrichtung, die auf Störgrößen reagieren kann. Sind zwei Austrageinrichtungen seitlich nebeneinander angeordnet, werden ihnen durch die Strohleitvorrichtung etwa gleiche Häckselgutmengen zugeführt. Die Art und Anbringung des Sensors ist beliebig; es könnten beispielsweise die aus der EP 0 685 151 A bekannten Sensoren genutzt werden.

Alternativ oder zusätzlich zur Lehre des Anspruchs 1 wird vorgeschlagen, dass der Sensor zur Erfassung der Querverteilung des Häckselguts stromauf des Auslasses der Austrageinrichtung mit dem Gutstrom zusammenwirkt. Dadurch können preiswerte Sensoren mit relativ geringer Reichweite verwendet werden. Sie können an einer relativ geschützten Stelle innerhalb des Gehäuses der Austrageinrichtung, insbesondere des Strohhäckslers angeordnet sein.

Die Messwerte der Sensoren werden der Steuereinrichtung zugeführt, welche über einen Motor die zur Beeinflussung der Querverteilung des Häckselguts eingerichtete Strohleitvorrichtung verstellt. Die Strohleitvorrichtung kann, wie oben beschrieben, stromauf des Einlasses der Austrageinrichtung angeordnet sein. Alternativ oder zusätzlich ist sie stromab des Auslasses der Austrageinrichtung angeordnet. Dafür kommen insbesondere Strohleitbleche, die unterhalb von Verteilerhauben angeordnet sind, in Frage. In diesem Fall bietet es sich an, dass der Motor die Strohleiteinrichtung eingangsseitig verstellt. Die Strohleitbleche werden somit an ihrem der Austrageinrichtung zugewandten Ende bewegt. Dadurch besteht die Möglichkeit, die Strohleitbleche in Positionen zu bringen, in denen sie derart mit Häckselgut beaufschlagt werden, dass das Häckselgut homogen über die Schnittbreite des Mähdreschers verteilt wird.

Die Sensoren dienen zur Erfassung der Querverteilung des Häckselguts. Um nicht teure Sensoren mit relativ hoher Reichweite verwenden zu müssen, bietet sich an, mehrere Sensoren über die Breite des Gutstroms zu verteilen, die jeweils zur Erfassung der Intensität des Gutstroms in ihrer Nähe eingerichtet sind. Derartige Sensoren können kapazitiv arbeiten oder vom Erntegut beim Aufprall auf dem Sensor benachbarte Flächen verursachte Geräusche erfassen. Der letztgenannte Sensortyp findet bereits zur Verlustkornerfassung in Mähdreschern Verwendung. Ein anderer Sensortyp umfasst ein Element, das vom Gut entgegen einer Kraft, die beispielsweise von einer Feder oder der Schwerkraft erzeugt wird, bewegbar ist. Die Position des Elements hängt von der Menge des vorbeiströmenden Häckselguts ab und wird vorzugsweise durch ein Potentiometer erfasst.

Die Signale des Sensors können von der Steuereinrichtung nicht nur zur Ansteuerung des Motors der Strohleitvorrichtung herangezogen werden, sondern auch die Geschwindigkeit der Trenneinrichtung des Mähdreschers steuern. Die Trenneinrichtung kann somit bei einer Geschwindigkeit betrieben werden, bei der das Häckselgut mit einer möglichst gleichmäßigen Breitenverteilung aus der Trenneinrichtung austritt. Alternativ oder zusätzlich wäre es auch denkbar, die Anzahl der Umläufe des Ernteguts in der Trenneinrichtung beeinflussende Leitbleche des Gehäuses eines Trennrotors anhand der Signale des Sensors zu verstellen, um eine homogene Breitenverteilung des Häckselguts am Auslass der Trenneinrichtung zu erzielen.

In den Zeichnungen sind drei nachfolgend näher beschriebene Ausführungsbeispiele der Erfindung dargestellt. Es zeigt:
- Fig. 1: einen Mähdrescher mit einer erfindungsgemäßen Strohleiteinrichtung,
- Fig. 2: eine schematische Draufsicht auf den Strohhäcksler und den Endbereich der Axialtrenneinrichtungen,
- Fig. 3: einen schematischen vertikalen Schnitt durch das Gehäuse einer zweiten Ausführungsform eines Strohhäckslers, und
- Fig. 4: einen schematischen vertikalen Schnitt durch das Gehäuse einer dritten Ausführungsform eines Strohhäckslers mit einer Strohleiteinrichtung.

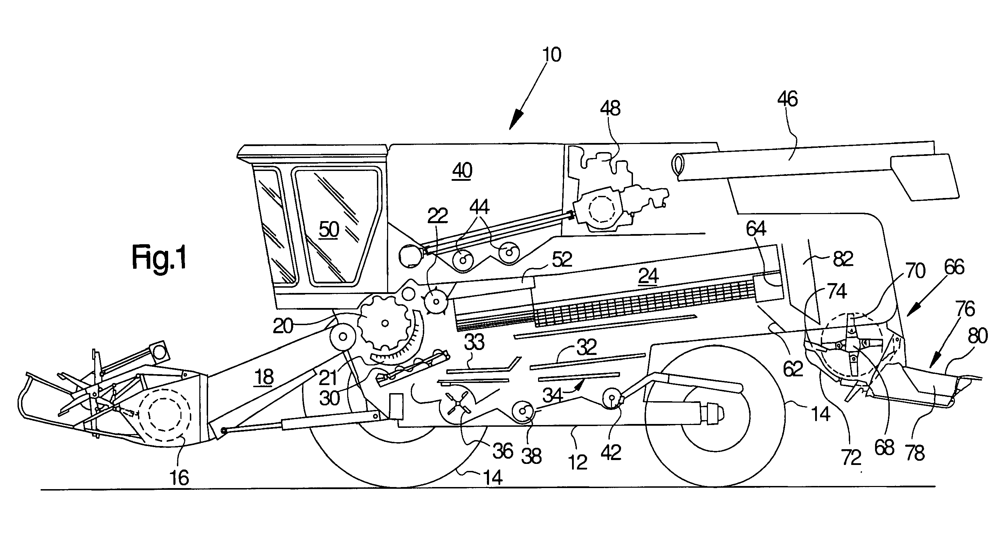

Die Figur 1 zeigt einen selbstfahrenden Mähdrescher 10 mit einem Tragrahmen 12, der sich über Räder 14 auf dem Boden abstützt und von diesen fortbewegt wird. An den vorderen Endbereich des Mähdreschers 10 ist eine Erntegutbergungsvorrichtung 16 angeschlossen, um Erntegut von dem Feld zu ernten und es nach oben und hinten durch einen Schrägförderer 18 Dresch- und Trenneinrichtungen zuzuführen. Die Dresch- und Trenneinrichtungen umfassen eine quer angeordnete Dreschtrommel 20 und einen dieser zugeordneten Dreschkorb 21, denen das geerntete Gut zuerst zugeführt wird. Danach wird das Dreschgut einer Abstreifrolle 23 und einer Wendetrommel 22 zugeführt, von wo aus es in einer Axialtrenneinrichtung 24 gelangt. Es ist aber auch denkbar, die Dreschtrommel 20 wegzulassen und eine Axialtrenneinrichtung zu verwenden, der einen Dreschabschnitt und einen Trennabschnitt aufweist. Es kann eine einzige Axialtrenneinrichtung oder zwei (oder mehrere) nebeneinander angeordnete Axialtrenneinrichtungen Verwendung finden.

Getreide und Spreu, die während des Dreschvorgangs abgeschieden werden, fallen auf wenigstens eine Schnecke 30, die beides einem Vorbereitungsboden 33 zuführt. Getreide und Spreu, die hingegen aus der Axialtrenneinrichtung 24 austreten, fallen auf einen Schüttelboden 32, der es zur Weitergabe auf den Vorbereitungsboden 33 führt. Der Vorbereitungsboden 33 gibt das Getreide und die Spreu einem Siebkasten 34 weiter, dem ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Schließlich wird das gereinigte Getreide aus dem Korntank 40 durch ein Entladesystem mit Querschnecken 44 und einem Entladeförderer 46 entladen.

All die vorgenannten verschiedenen Systeme werden mittels eines Verbrennungsmotors 48 angetrieben, der von einer Bedienungsperson aus einer Fahrerkabine 50 heraus bedient wird. Die verschiedenen Vorrichtungen zum Dreschen, Fördern, Reinigen und Abscheiden befinden sich innerhalb des Tragrahmens 12.

Die Abstreifrolle 23 und die Wendetrommel 22 führen gemeinsam mit einem Zufuhrgehäuse 52 das gedroschene Erntegut von der Dreschtrommel 20 und dem Dreschkorb 21 der Axialtrenneinrichtung 24 zu. Von der Axialtrenneinrichtung 24 werden ausgedroschene Erntegutreste (Stroh) durch einen rückwärtigen Auslass 64 nach hinten ausgeworfen. Durch die Wirkung der Schwerkraft fallen die Erntegutreste auf ein Strohleitblech 62 und gelangen in den Einlass eines Strohhäckslers 66. Er umfasst einen Rotor 68 mit um seinen Umfang und über seine Länge verteilten, pendelnd aufgehängten Schlegeln 70, der in einem Gehäuse 72 um eine etwa horizontale, quer zur Fahrtrichtung verlaufende Achse rotiert. Im Zusammenwirken mit Gegenmessern 74 werden die ausgedroschenen, großen Erntegutteile zu Häckselgut zerkleinert. An der Rückseite des Strohhäckslers 66 ist eine Verteileinrichtung 76 angeordnet, die eine Anzahl seitlich nebeneinander angeordneter Strohleitbleche 78 umfasst, welche unterhalb einer Strohverteilerhaube 80 angeordnet sind.

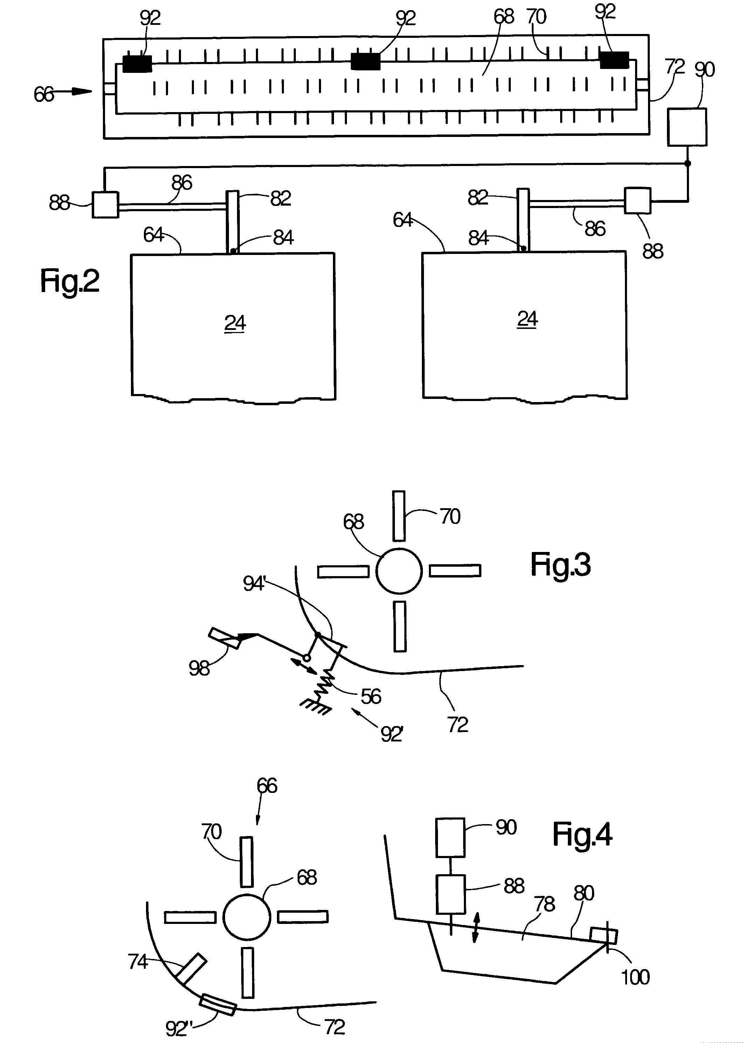

Zwischen den Auslässen 64 der Axialtrenneinrichtungen 24 und dem Einlass des Strohhäckslers 66 sind nebeneinander zwei Strohleitvorrichtung 82 in Form eines etwa vertikalen, sich in der Fahrtrichtung erstreckenden Leitblechs vorgesehen. Es wird auf die Figur 2 verwiesen, in der eine schematische Draufsicht auf die Enden der Axialtrenneinrichtungen 24, die Strohleitvorrichtungen 82 und den Strohhäcksler 66 gezeigt ist. Die Strohleitvorrichtungen 82 befinden sich bezüglich der Querrichtung jeweils etwa in der Mitte des Auslasses 64 der Axialtrenneinrichtungen 24. Sie sind an ihrem in Fahrtrichtung vorderen Ende um eine etwa vertikal verlaufende Achse 84 schwenkbar am Tragrahmen 12 des Mähdreschers 10 gelagert. Sie sind über je eine Koppelstange 86 mechanisch mit jeweils einem Motor 88 verbunden, der betreibbar ist, die ihm zugeordnete Strohleitvorrichtung 82 um die Achse 84 zu verschwenken. Je weiter die Strohleitvorrichtung 82 durch den Motor 66 nach links verschwenkt wird, umso mehr Häckselgut wird dem linken Bereich des Strohhäckslers 66 zugeführt und umgekehrt.

Die Motoren 66 sind Elektromotoren und mit einer Steuereinrichtung 90 verbunden. Die Steuereinrichtung 90 ist außerdem elektrisch mit drei Sensoren 92 verbunden, die an der Unterseite des Gehäuses 72 des Strohhäckslers 66 angeordnet sind. Die Sensoren 92 in der Ausführungsform gemäß Figur 2 sind kapazitive Sensoren, deren Ausgangssignal von der Menge des Häckselguts abhängt, dass in ihrer näheren Umgebung im Gehäuse 72 des Strohhäckslers 66 gefördert wird. Anhand der Ausgangssignale der drei Sensoren 92 erkennt die Steuereinrichtung 90, ob die linke Seite, die Mitte und die rechte Seite des Strohhäckslers 66 mit etwa gleichen Häckselgutmengen beaufschlagt werden. Falls das nicht der Fall ist, werden die Motoren 88 angesteuert, bis alle Sensoren 92 ein etwa gleiches Ausgangssignal liefern. Falls beispielsweise die äußeren Sensoren 92 eine geringere Signalstärke aufweisen als der mittlere Sensor 92, bedeutet das, dass dem Strohhäcksler 66 in der Mitte zuviel Häckselgut zugeführt wird. In diesem Moment greift die Steuereinrichtung 90 ein und verstellt die Strohleitvorrichtungen 82 so, dass mehr Häckselgut in die Außenbereiche des Strohhäckslers 66 geleitet wird. Dadurch erreicht man, dass das Häckselgut homogen über die Breite des Strohhäckslers 66 und auch über die Schnittbreite des Mähdreschers 10 verteilt wird.

Insbesondere wenn nur eine einzige Axialtrenneinrichtung 24 vorhanden ist, aber auch in der Ausführungsform gemäß Figur 1 und 2, kann bzw. können eine einzige Strohleitvorrichtung 82 oder mehrere kleinere, über die Breite des Auslasses der Axialtrenneinrichtung 24 verteilte Strohleitvorrichtungen verwendet werden, wie sie beispielsweise in der DE 43 13 841 A dargestellt sind. Es wäre auch denkbar, bei der Ausführungsform gemäß Figur 2 nur eine Strohleitvorrichtung 24 vorzusehen, die eingerichtet ist, den Häckselgutfluss entsprechend ihrer Stellung weiter nach links oder rechts zu verteilen, bzw. weiter nach innen oder außen. Für den letztgenannten Zweck kommt ein den Gutfluss aufteilendes Leitelement in Form eines so genannten Splitters in Frage, das in der Fahrtrichtung des Mähdreschers 10 bewegt wird.

In der Figur 3 ist ein vertikaler Schnitt durch einen Strohhäcksler 66 dargestellt, der mit einer anderen Ausführungsform der Sensoren 92 zur Erfassung der Querverteilung des Häckselguts ausgestattet ist. Die Sensoren 92' gemäß Figur 3 umfassen eine Platte 94, die an ihrem bezüglich der Gutflussrichtung stromauf liegenden Ende um eine horizontale Achse schwenkbar am Gehäuse 72 angelenkt ist. Die Platte 94 ist durch eine Feder 96 am Gehäuse 72 abgestützt und mechanisch mit einem Potentiometer 98 gekoppelt. Das Häckselgut drückt die Platte 94 gegen die Kraft der Feder 96 gegen das Gehäuse 72, so dass die Stellung - und somit die Ausgangsspannung - des Potentiometers von der Menge des jeweils an der Platte vorbeiströmenden Häckselguts abhängt. Das Potentiometer 98 ist elektrisch mit der Steuereinrichtung 90 verbunden. Es sind mehrere, beispielsweise drei, derartiger Sensoren 92' über die Breite des Häckselgutstroms verteilt.

In der Figur 4 ist noch eine andere Ausführungsform eines Sensors und einer Strohleiteinrichtung dargestellt. Der Sensor 92'' ist hier ein an sich bekannter Klopfsensor, wie er zur Verlustkornmessung in Mähdreschern verwendet wird. Vorbeiströmendes Häckselgut erzeugt am Gehäuse 72 und/oder direkt am Sensor 92'' akustische Schwingungen, die der Sensor 92'' erfasst. In dieser Ausführungsform ist die vom Motor 88 verstellte Strohleiteinrichtung nicht wie zuvor beschrieben stromauf, sondern stromab des Strohhäckslers 66 angeordnet. Die Strohleiteinrichtung ist ein unterhalb der Strohverteilerhaube 80 angeordnetes Strohleitblech 78, das an seiner Rückseite um eine etwa vertikale Achse 100 schwenkbar an der Strohverteilerhaube 80 angelenkt ist. An seiner Vorderseite ist das Strohleitblech 78 mit dem Motor 88 verbunden, der betreibbar ist, das Strohleitblech 78 um die Achse 100 zu verschwenken. Selbstverständlich sind mehrere derartige Strohleitbleche 78 über die Breite des Strohhäckslers 66 verteilt. Ihnen ist entweder ein gemeinsamer Motor 88 zugeordnet, oder es werden einzelne Strohleitbleche oder Gruppen von Strohleitblechen von mehreren Motoren 88 verstellt.

Die Steuereinrichtung 90 erhält von den Sensoren 92'' Ausgangssignale, die eine Information über die an den Sensoren 92'' jeweils vorbeiströmenden Häckselgutmengen enthalten. Die Steuereinrichtung 90 steuert den Motor 88 bzw. die Motoren 88 in Abhängigkeit von den Ausgangssignalen der Sensoren 92'' derart an, dass sich über die Schnittbreite des Mähdreschers 10 eine zumindest näherungsweise gleichmäßige Verteilung des Häckselguts ergibt. Beispielsweise werden die Strohleitbleche 78 derart verstellt, dass mehr Gut von der Mitte nach außen geleitet wird, wenn die Sensoren 92'' einen höheren Häckselgutstrom in der Mitte anzeigen und umgekehrt. Es wäre auch denkbar, die Strohleitbleche 78 auch an ihren Rückseiten zu bewegen. Weiterhin wäre es möglich, Sensoren für die Hangneigung und/oder Windrichtung und -stärke zur Ansteuerung der Motoren der verstellbaren Streuleitbleche heranzuziehen. Die erfindungsgemäßen Strohleitvorrichtungen können nicht nur an den beschriebenen Axialmähdreschern, sondern auch an Schüttlermähdreschern Verwendung finden.

## Patentansprüche

1. Mähdrescher (10) mit einer Trenneinrichtung (24), einer Austrageinrichtung für Stroh, insbesondere einem Strohhäcksler (66), wobei der Austrageinrichtung eine durch einen Motor (88) verstellbare Strohleitvorrichtung (82) zugeordnet ist, und mit einer Steuereinrichtung (90) des Motors (88), die mit einem zur Erfassung der Querverteilung des Guts eingerichteten Sensor (92, 92', 92'') verbunden ist, **dadurch gekennzeichnet, dass** die verstellbare Strohleitvorrichtung (82) zwischen der Trenneinrichtung (24) und der Austrageinrichtung (66) angeordnet ist und dass die Steuereinrichtung (90) betreibbar ist, den Motor (88) der Strohleitvorrichtung (82) basierend auf den Signalen des Sensors (92, 92', 92'') derart anzusteuern, dass selbsttätig eine möglichst gleichmäßige eingangsseitige Beaufschlagung der Austrageinrichtung erzielt wird.

2. Mähdrescher (10) nach Anspruch 1, **dadurch gekennzeichnet, dass** die Steuereinrichtung (90) betreibbar ist, die Strohleitvorrichtung (82) in eine Position zu verbringen, in der die Austrageinrichtung mit einer über seine Breite etwa konstanten Gutmenge beaufschlagt wird.

3. Mähdrescher (10) nach Anspruch 1 oder 2, **dadurch gekennzeichnet, dass** die Steuereinrichtung (90) betreibbar ist, die Strohleitvorrichtung (82) in eine Position zu verbringen, in der zwei nebeneinander angeordnete Austrageinrichtungen mit jeweils etwa derselben Gutmenge beaufschlagt werden.

4. Mähdrescher (10) mit einer Trenneinrichtung (24), einer Austrageinrichtung, insbesondere einem Strohhäcksler (66), wobei der Austrageinrichtung eine durch einen Motor (88) verstellbare Strohleitvorrichtung (78, 82) zugeordnet ist, und mit einer Steuereinrichtung (90) des Motors, die mit einem zur Erfassung der Querverteilung des Guts eingerichteten Sensor (92, 92', 92'') verbunden ist, insbesondere nach einem der Ansprüche 1 bis 3, **dadurch gekennzeichnet, dass** der Sensor (92, 92', 92'') eingerichtet ist, das Gut stromauf des Auslasses der Austrageinrichtung zu erfassen.

5. Mähdrescher (10) nach Anspruch 4, **dadurch gekennzeichnet, dass** der Sensor (92, 92', 92'') innerhalb eines Gehäuses (72) der Austrageinrichtung angeordnet ist.

6. Mähdrescher (10) nach Anspruch 4 oder 5, unter Ausschluss eines Rückbezugs des Anspruchs 4 auf Anspruch 1, **dadurch gekennzeichnet, dass** die Strohleitvorrichtung (78) stromab des Auslasses der Austrageinrichtung angeordnet ist.

7. Mähdrescher (10) nach Anspruch 6, **dadurch gekennzeichnet, dass** der Motor (88) eingerichtet ist, die Strohleitvorrichtung (78) eingangsseitig zu verstellen.

8. Mähdrescher (10) nach einem der vorhergehenden Ansprüche, **dadurch gekennzeichnet, dass** mehrere über die Breite des Gutstroms verteilte Sensoren (92, 92', 92'') jeweils zur Erfassung der Intensität des Gutstroms in ihrer Umgebung eingerichtet sind.

9. Mähdrescher (10) nach Anspruch 8, **dadurch gekennzeichnet, dass** wenigstens einer der Sensoren (92) kapazitiv arbeitet.

10. Mähdrescher (10) nach Anspruch 8, **dadurch gekennzeichnet, dass** wenigstens einer der Sensoren (92'') vom aufprallenden Gut verursachte Geräusche erfasst.

11. Mähdrescher (10) nach Anspruch 8, **dadurch gekennzeichnet, dass** wenigstens einer der Sensoren (92') ein vom Gut bewegbares Element (94) umfasst, dessen Position erfassbar ist.

12. Mähdrescher (10) nach einem der Ansprüche 1 bis 11, **dadurch gekennzeichnet, dass** die Steuereinrichtung (90) zur Steuerung der Geschwindigkeit der Trenneinrichtung (24) eingerichtet ist.

13. Mähdrescher (10) nach einem der Ansprüche 1 bis 12, **dadurch gekennzeichnet, dass** die Trenneinrichtung (24) einen innerhalb eines Gehäuses angeordneten Trennrotor umfasst, in dem mittels eines Motors verstellbare Leitbleche angeordnet sind, wobei der Motor durch die Steuereinrichtung (90) ansteuerbar ist.

## Claims

1. Combine-harvester (10) with a separator (24), a discharger for straw, in particular a straw cutter (66), wherein the discharger has an associated straw guiding device (82), which is adjustable through a motor (88), and with a control means (90) of the motor (88), which is connected to a sensor (92, 92', 92") fitted to detect the transverse distribution of the material, **characterised in that** the adjustable straw guiding device (82) is arranged between the separator (24) and the discharger (66), and that the control means (90) can be operated to actuate the motor (88) of the straw guiding device (82) on the basis of the signals of the sensor (92, 92', 92") in such a manner that the discharger is automatically loaded as uniformly as possible on the input side.

2. Combine-harvester (10) according to Claim 1, **characterised in that** the control means (90) can be operated to move the straw guiding device (82) into a position, in which the discharger is loaded with an approximately constant quantity of material over its width.

3. Combine-harvester (10) according to Claim 1 or 2, **characterised in that** the control means (90) can be operated to move the straw guiding device (82) into a position, in which two dischargers arranged adjacent to one another are respectively loaded with approximately the same quantity of material.

4. Combine-harvester (10) with a separator (24), a discharger, in particular a straw cutter (66), wherein the discharger has an associated straw guiding device (78, 82), which is adjustable through a motor (88), and with a control means (90) of the motor, which is connected to a sensor (92, 92', 92") fitted to detect the transverse distribution of the material, in particular according to one of Claims 1 to 3, **characterised in that** the sensor (92, 92', 92") is fitted to detect the material upstream of the outlet of the discharger.

5. Combine-harvester (10) according to Claim 4, **characterised in that** the sensor (92, 92', 92") is arranged inside a housing (72) of the discharger.

6. Combine-harvester (10) according to Claim 4 or 5, excluding a back reference of Claim 4 to Claim 1, **characterised in that** the straw guiding device (78) is arranged downstream of the outlet of the discharger.

7. Combine-harvester (10) according to Claim 6, **characterised in that** the motor (88) is fitted to adjust the straw guiding device (78) on the input side.

8. Combine-harvester (10) according to one of the preceding claims, **characterised in that** several sensors (92, 92', 92") distributed over the width of the flow of material are respectively fitted to detect the intensity of the flow of material in their environment.

9. Combine-harvester (10) according to Claim 8, **characterised in that** at least one of the sensors (92) operates with capacitance.

10. Combine-harvester (10) according to Claim 8, **characterised in that** at least one of the sensors (92") detects noise caused by the impact of material.

11. Combine-harvester (10) according to Claim 8, **characterised in that** at least one of the sensors (92') comprises an element (94), which is movable by the material and the position of which is detectable.

12. Combine-harvester (10) according to one of Claims 1 to 11, **characterised in that** the control means (90) is fitted to control the speed of the separator (24).

13. Combine-harvester (10) according to one of Claims 1 to 12, **characterised in that** the separator (24) comprises a separating rotor, which is arranged inside a housing and in which baffle plates adjustable by means of a motor are arranged, wherein the motor can be actuated by the control means (90).

## Revendications

1. Moissonneuse-batteuse (10) avec un dispositif de séparation (24), un dispositif d'extraction pour la paille, en particulier un broyeur de paille (66), dans laquelle un dispositif de guidage de paille (82) ajustable par un moteur (88) est associé au dispositif d'extraction, et avec un dispositif de commande (90) du moteur (88), qui est raccordé à un détecteur (92, 92', 92") installé en vue de la détection de la distribution transversale de la matière, **caractérisée en ce que** le dispositif de guidage de paille ajustable (82) est disposé entre le dispositif de séparation (24) et le dispositif d'extraction (66) et **en ce que** le dispositif de commande (90) peut être conduit pour commander le moteur (88) du dispositif de guidage de paille (82), en se basant sur les signaux du détecteur (92, 92', 92") de telle façon que l'on obtienne automatiquement une alimentation d'entrée aussi uniforme que possible du dispositif d'extraction.

2. Moissonneuse-batteuse (10) selon la revendication 1, **caractérisée en ce que** le dispositif de commande (90) peut être conduit pour amener le dispositif de guidage de paille (82) dans une position dans laquelle le dispositif d'extraction est alimenté avec une quantité de matière sensiblement constante sur sa largeur.

3. Moissonneuse-batteuse (10) selon la revendication 1 ou 2, **caractérisée en ce que** le dispositif de commande (90) peut être conduit pour amener le dispositif de guidage de paille (82) dans une position dans laquelle deux dispositifs d'extraction disposés l'un à côté de l'autre sont alimentés chacun avec sensiblement la même quantité de matière.

4. Moissonneuse-batteuse (10) avec un dispositif de séparation (24), un dispositif d'extraction, en particulier un broyeur de paille (66), dans laquelle un dispositif de guidage de paille (78, 82) ajustable par un moteur (88) est associé au dispositif d'extraction, et avec un dispositif de commande (90) du moteur, qui est raccordé à un détecteur (92, 92', 92") installé en vue de la détection de la distribution transversale de la matière, en particulier selon l'une des revendications 1 à 3, **caractérisée en ce que** le détecteur (92, 92', 92") est installé de façon à détecter la matière en amont de la sortie du dispositif d'extraction.

5. Moissonneuse-batteuse (10) selon la revendication 4, **caractérisée en ce que** le détecteur (92, 92', 92") est disposé à l'intérieur d'un boîtier (72) du dispositif d'extraction.

6. Moissonneuse-batteuse (10) selon la revendication 4 ou 5, à l'exclusion d'une relation de la revendication 4 à la revendication 1, **caractérisée en ce que** le dispositif de guidage de paille (78) est disposé en aval de la sortie du dispositif d'extraction.

7. Moissonneuse-batteuse (10) selon la revendication 6, **caractérisée en ce que** le moteur (88) est installé de façon à ajuster le dispositif de guidage de paille (78) du côté de l'entrée.

8. Moissonneuse-batteuse (10) selon l'une quelconque des revendications précédentes, **caractérisée en ce que** plusieurs détecteurs (92, 92', 92") répartis sur la largeur du courant de matière sont installés de façon à détecter respectivement l'intensité du courant de matière dans leur voisinage.

9. Moissonneuse-batteuse (10) selon la revendication 8, **caractérisée en ce qu'**au moins un des détecteurs (92) travaille par voie capacitive.

10. Moissonneuse-batteuse (10) selon la revendication 8, **caractérisée en ce qu'**au moins un des détecteurs (92") détecte le bruit provoqué par les chocs de la matière entrante.

11. Moissonneuse-batteuse (10) selon la revendication 8, **caractérisée en ce qu'**au moins un des détecteurs (92') comporte un élément (94) déplaçable par la matière, dont la position peut être détectée.

12. Moissonneuse-batteuse (10) selon l'une quelconque des revendications 1 à 11, **caractérisée en ce que** le dispositif de commande (90) est installé de façon à commander la vitesse du dispositif de séparation (24).

13. Moissonneuse-batteuse (10) selon l'une quelconque des revendications 1 à 12, **caractérisée en ce que** le dispositif de séparation (24) comprend un rotor de séparation disposé dans une enceinte, dans laquelle sont disposés des déflecteurs ajustables au moyen d'un moteur, le moteur pouvant être commandé par le dispositif de commande (90).
